(19) Europäisches Patentamt

European Patent Office

Office européen des brevets

(11) **EP 1 047 222 A1**

(12) **DEMANDE DE BREVET EUROPEEN**

(43) Date de publication:
**25.10.2000 Bulletin 2000/43**

(51) Int Cl.7: **H04L 12/24**, G06F 11/32

(21) Numéro de dépôt: **00401037.7**

(22) Date de dépôt: **13.04.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **20.04.1999 FR 9904974**

(71) Demandeur: BULL S.A.
**78434 Louveciennes Cedex (FR)**

(72) Inventeurs:
• **Gallon, Anne**
  **78220 Viroflay (FR)**

• **Guilbaud, Christophe**
  **78180 Montigny le Bretonneux (FR)**
• **Winter, Thierry**
  **78000 Versailles (FR)**

(74) Mandataire: **Denis, Hervé**
  **BULL S.A.,**
  **PC LV-58D20**
  **68 route de Versailles**
  **78434 Louveciennes Cedex (FR)**

(54) **Procédé de gestion des états de fonctionnement dans un système informatique**

(57) Le procédé consiste à créer un objet de bloc (91) de statistiques sur des alarmes représentatives de dysfonctionnements relatifs à un objet surveillé (tracedObjectInstance) du système, le bloc (91) incluant un filtre (92) pour sélectionner au moins une caractéristique des alarmes relatives à l'objet surveillé, à classer le bloc (91) dans une hiérarchie d'au moins deux niveaux représentatifs de la qualité d'un état de fonctionnement de l'objet surveillé, à mettre à jour l'état de l'objet d'information filtrée si les alarmes correspondent à celle(s) sélectionnée(s) et à donner à un utilisateur du système informatique une information sur l'état de l'objet surveillé en réponse au classement de l'objet d'information.

FIG. 8B

EP 1 047 222 A1

## Description

### Domaine technique.

L'invention se rapporte à la gestion des états de fonctionnement dans un système informatique. Les états de fonctionnement sont notamment déterminés à partir de dysfonctionnements détectés dans le système informatique. Les états de fonctionnement peuvent concerner tout ou partie matérielle et/ou logicielle du système, par exemple des machines du système, un réseau informatique du système et des applications en cours dans le système. L'invention est notamment adaptée à un système informatique représenté en technologie orientée objets dans une base connue sous le nom de base d'informations d'administration ou base MIB (Management Information Base). L'invention a plus particulièrement pour objet un procédé pour faire cette gestion et peut avantageusement s'intégrer dans un système d'administration du système informatique. Elle a pour objets corollaires le système d'administration et le système informatique mettant en oeuvre le procédé.

### L'art antérieur.

Dans le système d'administration connu sous le nom de marque OpenMaster déposée par le demandeur et qui va servir d'exemple dans la suite du texte, la gestion des états de fonctionnement d'un système informatique se fait par un procédé consistant à créer et à mettre en mémoire une instance de bloc de statistiques appelé StatsBlock formé à partir d'alarmes représentatives de dysfonctionnements relatifs à un objet surveillé dans la base MIB, à classer l'instance StatsBlock dans une hiérarchie d'au moins deux niveaux représentatifs de la qualité d'un état de fonctionnement de l'objet surveillé et à donner à un utilisateur du système informatique une information, au moyen d'une icône animée, sur l'état de l'objet surveillé en réponse au classement du bloc de statistiques. La qualité d'un état de fonctionnement correspond à ce qui est nommé par la gravité des alarmes relatives à l'objet surveillé.

L'animation par alarmes en temps réel ne permet actuellement pas de distinguer entre deux alarmes ayant des caractéristiques différentes. En effet, les objets StatsBlock recensent les alarmes relatives au sous-arbre de l'objet surveillé et leurs statistiques ne tiennent pas compte des caractéristiques des alarmes. Cependant, il serait très avantageux de vouloir animer une icône pour les alarmes relatives à un problème donné. Par exemple, on ne peut pas animer l'icône représentative d'une machine particulière du réseau pour qu'elle change de couleur uniquement si cette machine tombe en panne, et non si un objet surveillé, par exemple un élément accessoire de cette machine est défaillant, tel qu'une imprimante. De même, l'icône ne peut pas également changer de couleur à la réception d'une alarme avertissant du manque de papier dans son imprimante locale. Un autre problème est lié au fait que, même si la gravité des alarmes peut être distinguée par des couleurs, il n'y a en l'occurrence que deux couleurs significatives (orange et rouge) alors qu'il peut y avoir beaucoup plus que deux types d'alarmes.

### Sommaire de l'invention.

Un but de l'invention est d'offrir une isolation de problèmes spécifiques selon les domaines d'intérêt.
Un second but de l'invention est d'offrir une surveillance en temps réel.
Un troisième but de l'invention est la simplicité de réalisation à moindre coût en temps d'exécution et en argent.
L'invention a pour objet un procédé de gestion par ordinateur des états de fonctionnement d'un système informatique représenté en technologie orientée objets, consistant à créer et mettre en mémoire un objet d'information sur des alarmes représentatives de dysfonctionnements relatifs à un objet surveillé dans le système, à classer l'objet d'information dans une hiérarchie d'au moins deux niveaux représentatifs de la qualité d'un état de fonctionnement de l'objet surveillé, et à donner à un utilisateur du système informatique une information sur l'état de l'objet surveillé en réponse au classement de l'objet d'information, caractérisé en ce qu'il consiste à ajouter à l'objet d'information un filtre pour sélectionner au moins une caractéristique des alarmes relatives à l'objet surveillé et former ainsi au moins un objet d'information filtrée, à mettre à jour l'état de l'objet d'information filtrée si les alarmes correspondent à celle(s) sélectionnée(s) et à mettre à jour en conséquence l'information donnée à l'utilisateur.

L'invention a pour objets corollaires un système mettant en oeuvre le procédé pour l'administration d'un système informatique, un système informatique mettant en oeuvre le procédé et un support d'enregistrement d'un programme d'ordinateur pour la mise en oeuvre du procédé.

Les caractéristiques et avantages de l'invention ressortent de la description qui suit, faite en référence aux dessins annexés.

**Présentation des dessins.**

- La figure 1 est une vue synoptique d'un système d'administration d'un système informatique, le système d'administration mettant en oeuvre un procédé de gestion en langage orienté objets des états de fonctionnement dans le système informatique.
- La figure 2 est une vue synoptique détaillée de la structure d'une plate-forme d'administration du système d'administration représenté sur la figure 1.
- La figure 3 est une vue schématique d'un arbre représentatif d'un exemple de base d'informations d'administration (MIB) correspondant au système informatique représenté sur la figure 1 et mise en oeuvre par l'exemple de procédé illustré pour la gestion des états de fonctionnement dans le système informatique.
- La figure 4 est une vue schématique d'un arbre d'instances représentatif d'un autre exemple de base d'information d'administration (MIB) servant à illustrer comment y est identifiée une instance.
- La figure 5 est une vue synoptique des moyens qui, dans le système d'administration représenté sur les figures 1 et 2, sont impliqués par procédé illustré de gestion du système informatique, afin d'illustrer un exemple de mise en oeuvre de ce procédé.
- La figure 6 est une vue schématique d'un exemple de fenêtre représentative d'états de fonctionnement dans le système informatique représenté sur la figure 1.
- La figure 7 est une vue schématique en forme d'arbre des instances d'une partie de la base MIB représentative du service de journal d'alarmes représenté sur les figures 2 et 5, inclus dans le système d'administration et impliqué pour la mise en oeuvre du procédé de l'exemple illustré.
- Et les figures 8A et 8B sont des vues schématiques d'instances de statistiques StatsBlock mis en oeuvre par le procédé de l'exemple illustré.

**Description détaillée d'exemples illustrant l'invention.**

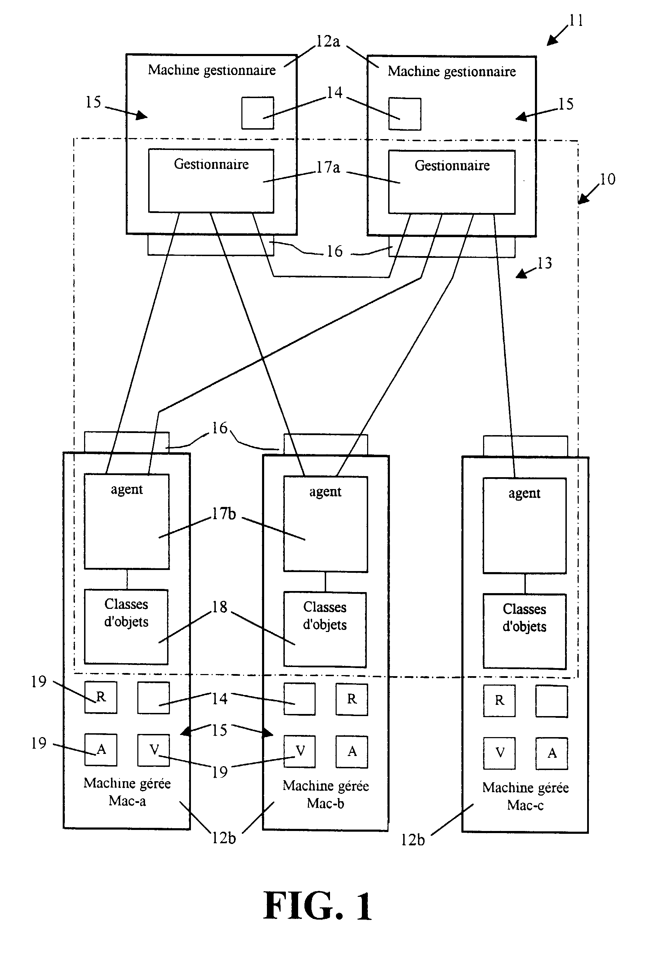

La figure 1 représente un système d'administration 10 d'un système informatique 11. L'exemple qui suit se rapporte au système d'administration et de sécurité connu sous le nom de marque déposée OpenMaster du demandeur. Sa conception est conforme aux normes ISO de l'administration de systèmes et réseaux. Dans ces conditions, les termes utilisés seront conformes à cette norme, qui sont de langue anglaise, notamment les sigles et acronymes. D'autre part, les verbes "administrer" et "gérer" et leurs dérivés qui seront employés ici traduisent tous deux indifféremment le verbe anglais "manage" et ses dérivés. L'homme du métier connaît bien ces normes. Compte tenu de leur masse informative, on ne donnera ici que les éléments nécessaires à la compréhension de l'invention.

Le système informatique illustré 11 est distribué et composé de machines 12 (12a, 12b) organisées en un ou plusieurs réseaux 13. Une machine est une unité conceptuelle très large, de nature matérielle et logicielle, pouvant être les moyens impliqués pour exécuter une application donnée, des moyens pour exécuter une fonction donnée, un ordinateur, ainsi qu'un système informatique dans une architecture à systèmes en cascade. Les machines 12 peuvent être donc très diverses, telles que stations de travail, serveurs, routeurs, machines spécialisées et passerelles entre réseaux. Le système informatique 11 est ordinairement un système comprenant plusieurs processeurs 14, un processeur 14 étant par exemple illustré dans chaque machine 12, des moyens de mémoire 15 pour contenir les logiciels et les données du système, et des moyens d'entrée-sortie 16 servant pour la communication entre machines par l'intermédiaire du réseau 13 à l'aide de protocoles divers, ainsi que pour une ou plusieurs communications extérieures, par exemple pour l'impression, la télécopie, etc. Un tel système peut par exemple gérer des données à distance, distribuer des données dans le cas d'un système de réservation, commander l'exécution de programmes à distance sur des machines spécialisées, partager localement des ressources physiques ou logicielles, et communiquer.

Le système d'administration 10 de l'exemple illustré a une architecture de type client-serveur. Les unités formant clients et serveurs dans le système d'administration 10 comprennent deux gestionnaires 17a formant serveurs et trois agents 17b formant clients. Une machine 12 incluant un gestionnaire est dite machine gestionnaire ou serveur 12a et une machine incluant un agent est dite machine gérée 12b ou cliente. Les gestionnaires 17a et les agents 17b sont reliés entre eux par l'intermédiaire du réseau 13. Dans l'exemple illustré, les deux gestionnaires sont reliés entre eux, l'un des gestionnaires 17a étant relié à deux des agents 17b tandis que l'autre est relié aux trois agents. Les liaisons entre gestionnaires et agents peuvent être très diverses. D'autre part, les communications entre gestionnaires et agents peuvent se faire selon un ou plusieurs protocoles, de préférence normalisés tels que les protocoles CMIP (Common Management Information Protocol) ou SNMP (System Network Management Protocol). Le protocole CMIP repose sur la norme ISO définissant les services pour le transfert des informations d'administration appelés services CMIS (Common Management Information Services).

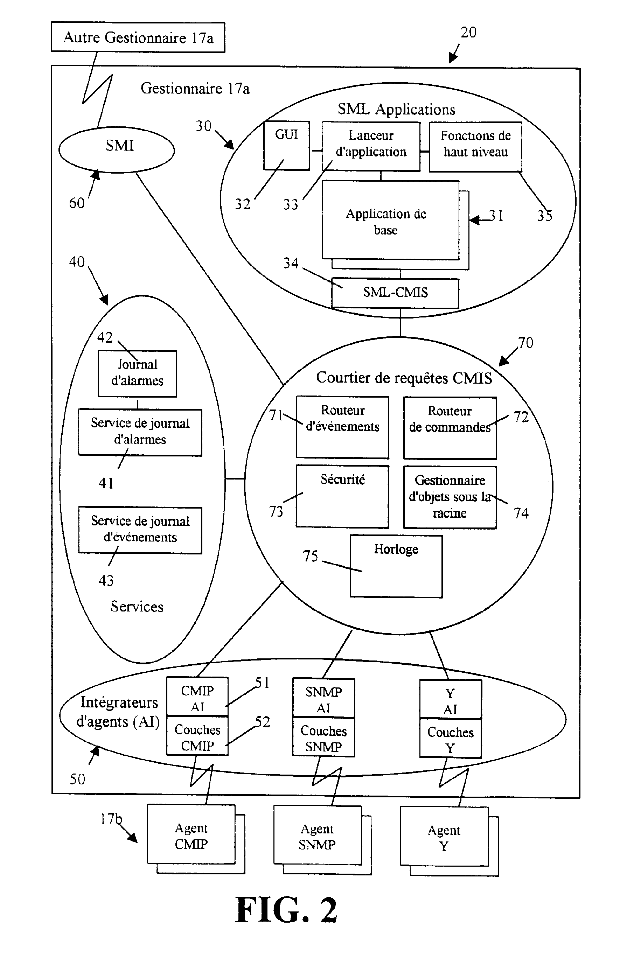

La figure 2 illustre la structure d'une plate-forme d'administration 20 du système d'administration 10. La plate-forme 20 peut être limitée à une machine gestionnaire 12a, ou être distribuée parmi plusieurs machines gestionnaires. Pour des raisons de commodité, la plate-forme illustrée dans la figure 2 sera limitée à une machine gestionnaire 12a et correspond ainsi au gestionnaire 17a. La plate-forme illustrée 20 se compose de cinq blocs fonctionnels : un bloc 30 d'applications SML, un bloc 40 de services, un bloc 50 d'intégrateurs d'agents, un bloc 60 d'interface de gestionnaire, et un bloc de communication 70.

Le bloc 30 d'applications inclut un ensemble d'applications de base 31 (core applications), une interface graphique d'utilisateur 32 appelée interface GUI (Graphic User Interface), un tableau de bord constituant un lanceur d'application 33, une interface 34 de communication extérieure du bloc 30, et un ensemble 35 de fonctions de haut niveau. Dans l'exemple choisi, les applications 31 sont écrites dans le langage SML (System Management Language) d'administration de système et communiquent avec le bloc 70 par l'interface 34, qui est donc ici une interface SML/CMIS. L'interface GUI 32 permet à un utilisateur de se connecter à la machine 12a pour démarrer et arrêter comme il le désire ses propres copies des applications de base 31. Le lanceur d'application 33 est un tableau représentant les applications 31 sous forme générale par leur nom et/ou, comme dans l'exemple choisi, sous forme d'icônes. Il suffit de cliquer sur l'icône choisie pour lancer l'application correspondante. Les fonctions de haut niveau 35 sont ajoutées pour offrir des fonctions particulières et des interfaces graphiques correspondantes.

Le bloc 40 comprend plusieurs services, notamment un service 41 de journal d'alarmes relié à un journal 42 d'alarmes et un service 43 de journal d'événements normalement connecté à un journal d'événements non illustré. Le bloc 50 contient des intégrateurs 51 d'agents, appelés ordinairement par leur sigle AI (Agent Integrator) et affectés à des protocoles respectifs tels que CMIP, SNMP ou tout protocole quelconque Y. Le protocole CMIP sera pris comme exemple dans la suite de la description. Chaque intégrateur d'agents est connecté au bloc 70 et traverse des couches 52 propres au protocole correspondant à l'intégrateur pour communiquer avec un ou plusieurs agents 17b fonctionnant sous le protocole correspondant. Le bloc d'interface 60 permet à la plate-forme 20 de communiquer avec un autre gestionnaire 17a du système 10, pouvant être un supragestionnaire de niveau hiérarchique supérieur. Enfin, le bloc de communication 70 constitue un lien entre les autres blocs et est appelé courtier de requêtes CMIS ou distributeur CMIS (CMIS Dispatcher). Il contient un routeur 71 d'événements, permettant aux composants d'administration de souscrire à des notifications d'événement, un routeur 72 de commandes pour transmettre des requêtes au composant destinataire et éviter aux applications de savoir quel composant "possède" chaque instance MOI, une infrastructure de sécurité 73, un gestionnaire 74 d'objets sous la racine ROOT (ROOT Object Manager), et une horloge 75 (timer).

Selon une option courante et avantageuse du système d'administration 10, un gestionnaire 17a gère aussi la machine gestionnaire 12a correspondante ou gère tout ou partie des machines gestionnaires. Cela peut se faire de façon similaire à celle illustrée précédemment, plus ou moins adaptée à cette option. L'exemple illustré offre le double avantage de faciliter la lecture des dessins tout en permettant à l'homme du métier de faire une généralisation du système décrit et illustré.

Le système informatique 11 de la figure 1 se compose de moyens matériels ou logiciels, réels ou virtuels, tels que machines, imprimantes, circuits virtuels et applications. Le système d'administration 10 utilise ces moyens selon un modèle de données orienté objets, dont on connaît les principales caractéristiques : classes, objets, héritage, encapsulation, méthodes (ici actions) et événements. L'organisation des classes dans l'exemple choisi du système 10 est hiérarchique. On distingue : l'arbre des classes, une classe étant définie en subordination à une ou plusieurs classes mères ; et l'arbre des instances, une instance étant attachée à une ou plusieurs instances mères. En particulier, une classe est définie par des caractéristiques nommées attributs, tels qu'un nom d'un composant du système et un état d'impression. Un objet d'une classe sera appelé une instance de la classe. Dans l'exemple choisi, les moyens du système informatique 11 sont donc convertis en classes d'objets organisées hiérarchiquement dans une base d'informations d'administration MIB (Management Information Base). Cette base n'est pas une base de données proprement dite, mais est assimilable à un catalogue de caractéristiques puisqu'elle contient la description et le contenu de toutes les classes gérées par le système d'administration 10. Dans la base MIB, les objets sont divisés en classes d'objets gérés, dites classes MOC (Managed Object Class). Un objet géré est une vue abstraite, définie pour les besoins de la gestion, d'une ressource logique ou physique d'un système. Chaque classe MOC représente un type donné desdits moyens du système 11. À chaque classe MOC peuvent être attachées une ou plusieurs instances d'objets gérés, appelées instances MOI (Managed Object Instance) et représentant des occurrences actuelles desdits moyens.

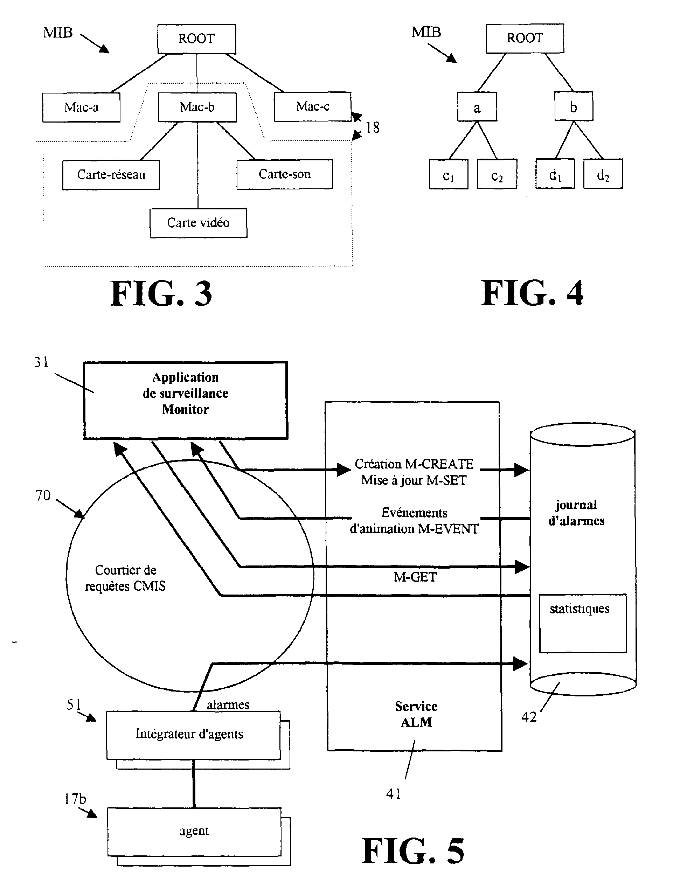

La figure 3 illustre un exemple de structure d'une base MIB. Elle a une structure arborescente, faite d'une racine ROOT à laquelle sont attachés des sous-arbres ou sous-MIB 18, ici représentatifs des trois machines gérées 12b appelées Mac-a, Mac-b et Mac-c. Les sous-arbres 18 sont aussi représentés sous forme synoptique dans la figure 1, en liaison avec les agents 17a respectifs. La racine ROOT est contenue dans le gestionnaire 74 et les racines des sous-arbres seront appelées sous-racines correspondant au terme anglais Rootlet. Ainsi, toute application 31 devant traiter un objet de la base MIB s'adresse au gestionnaire 74 pour accéder à l'objet. Dans l'exemple illustré, on a supposé que chaque machine 12b a, comme représenté sur la figure 1, trois cartes 19, à savoir une carte-réseau 19R, une carte vidéo 19V et une carte-son 19A, de sorte que chaque sous-arbre 18 contient les trois objets correspondants. Dans la figure 3, seul le sous-arbre 18 relatif à la machine Mac-b a été développé. On y voit que le sous-arbre 18 a la sous-racine Mac-b incluant trois fils constitués par les trois objets respectifs carte-réseau, carte vidéo et carte-son (19R, 19V et 19A).

Une instance dans la base MIB a un nom distinctif relatif RDN (Relative Distinguished Name) sous forme d'une liste d'assertions sur valeur d'attribut appelées assertions AVA (Attribute Value Assertion). Chaque assertion AVA est un couple <attribut de nommage> <valeur>, l'attribut de nommage étant celui qui, dans la classe, permet l'identification unique d'une instance par rapport à son instance mère. Dans un gestionnaire 17a de l'exemple illustré, un nom RDN est composé d'une seule assertion AVA, donc d'un seul couple <attribut de nommage> <valeur>. D'une manière générale, il est cependant possible qu'un nom distinctif RDN ait plusieurs assertions AVA.

Chaque instance dans la base MIB est identifiée de façon unique par son nom distinctif DN (Distinguished Name), qui est la suite des noms RDN sur le chemin entre la racine et l'instance dans l'arbre des instances. La figure 4 est un arbre très schématique d'instances servant à illustrer comment y est identifiée une instance. En référence à la figure 4, l'instance racine ROOT a deux instances filles a, b ayant respectivement deux instances filles $c_1$, $c_2$ et $d_1$, $d_2$. Dans ce cas, l'instance $d_2$ a pour nom distinctif DN : /RDN(b)/RDN($d_2$). Un sous-arbre d'une instance correspond à l'ensemble formé par l'instance elle-même et les instances qui lui sont subordonnées dans l'arbre des instances.

Le protocole de communication choisi comme exemple entre la plate-forme 20 (un gestionnaire 17a en l'occurrence) et une machine gérée 12b du système 10 est le protocole CMIP qui repose sur la norme ISO définissant les services CMIS. Ces services sont bien adaptés à la structure hiérarchique de la base MIB. Ils incluent un ensemble de services de base, appelés aussi primitives, tels que : M-GET pour lire une ou plusieurs instances, M-SET pour mettre à jour une ou plusieurs instances, M-CREATE pour créer une instance, M-ACTION pour activer une opération spécifique sur une ou plusieurs instances et M-EVENT pour envoyer un événement. Ces services supportent les notions de filtrage offrant la possibilité de filtrer les instances selon certains critères portant sur leurs attributs et les notions de portée (scope) permettant de préciser le niveau de profondeur dans l'arbre des instances.

La figure 5 est une vue schématique des moyens impliqués pour la gestion de dysfonctionnements dans le système informatique 11. Dans l'exemple illustré, la gestion est faite par le système d'administration 10, et plus particulièrement en exécutant une application de surveillance 31 parmi les applications de base 31 disponibles dans le bloc 30 de la plate-forme 20 représentée sur la figure 2. L'application de surveillance 31 est appelée Monitor dans le système d'administration OpenMaster® pris comme exemple et commercialisé par le demandeur. L'application définit quels objets sont à surveiller dans la base MIB. Les objets surveillés peuvent être prédéfinis ou définis par l'utilisateur à l'aide de l'interface GUI 32. Un objet surveillé est désigné par son instance d'objet dans l'application Monitor et sera appelé par la suite instance surveillée tracedObjectInstance pour la distinguer des autres instances d'un objet non surveillé. Comme indiqué à la figure 5, ils sont créés par l'application Monitor par la primitive M-CREATE, et mis à jour par la primitive M-SET.

Lors de la surveillance des objets ainsi déterminés, des dysfonctionnements relatifs à ces objets se traduisent par des signaux de dysfonctionnement envoyés à l'agent 17b correspondant. En réponse, l'agent envoie des événements de dysfonctionnement, dont le nom et la définition correspondent au type de l'agent. Par exemple, selon le type d'agent, les événements de dysfonctionnement sont appelés *alerts* de type SNA, *traps* de type SNMP et *alarms* de type CMIP. La plate-forme 20 utilisant le type CMIP, les événements de dysfonctionnement seront donc appelés des alarmes, comme indiqué à la figure 5. En d'autres termes, les intégrateurs AI 51 peuvent recevoir différents types d'événements de dysfonctionnement et, si ces événements ne sont pas du type CMIP, les intégrateurs AI 51 les convertissent en alarmes. Chaque alarme correspond donc à une occurrence d'un problème spécifique tel que défini précédemment.

Les alarmes sont gérées par le service 41 de journal d'alarmes, appelé plus couramment service ALM (Alarm Log Manager), du bloc 40 de services de la plate-forme 20, en coopération avec l'application de surveillance 31 et par l'intermédiaire du bloc de communication 70. Les alarmes sont stockées dans le journal 42 d'alarmes constituant une base de données reliée au service ALM. À chaque instance surveillée tracedObjectInstance correspond aussi des statistiques mises à jour à chaque alarme. Les statistiques sont stockées dans le journal d'alarmes 42. La lecture d'une donnée dans le journal 42 est faite sous l'action de la primitive M-GET. Elle se traduit par une requête (*request*) au niveau de l'application, qui est reçue par le journal 42 sous le nom d'indication (*indication*). La donnée lue est envoyée comme réponse (*response*) par le journal 42 et est reçue comme confirmation (*confirmation*) par l'application.

Il existe, dans la norme ISO/IEC 10165-2, cinq types d'alarmes, à savoir les alarmes : *Communication, Environmental, Equipment, ProcessingError et QualityOfService.* Une alarme peut être définie notamment par :

- son instance d'origine (sourceObjectInstance):
- son type d'alarme (eventType),
- sa cause probable (probableCause),
- son problème spécifique (specificProblems),
- sa gravité (perceivedSeverity), qui peut prendre 6 valeurs énumérées :

0 : indéterminée (Indeterminate)

1 : critique (Critical)

2 : majeure (Major)

3 : mineure (Minor)

4 : avertissement (Warning)

5 : R.A.S. (rien à signaler) (Cleared)

Dans l'état actuel de la norme, le problème spécifique specificProblems est une caractéristique optionnelle de l'alarme, alors que les quatre autres citées ci-dessus sont toujours présentes. Les quatre caractéristiques sourceObjectInstance, eventType, probableCause et specificProblems permettent d'identifier de façon unique un problème donné. Le service ALM ne stocke que la dernière occurrence d'un problème donné. Par conséquent, une seconde occurrence d'alarme pour le même problème donné remplace l'occurrence précédente.

Une alarme ISO a toujours parmi ses caractéristiques la classe d'objet d'origine (sourceObjectClass) et peut avoir les autres caractéristiques suivantes :

- sa date d'origine (eventTime),
- son état de sauvegarde (backedUpStatus),
- l'objet sauvegardé (backUpObject),
- son indication de tendance (trendIndication),
- son information de seuil (thresholdInfo),
- son identifieur de notification (notificationIdentifier),
- ses notifications corrélées (correlatedNotifications),
- sa définition de changement d'état (stateChangeDefinition),
- les attributs qu'elle surveille (monitoredAttributes),
- ses actions de dépannage proposées (proposedRepairActions),
- un texte additionnel (additionalText), et
- une information additionnelle (additionalInformation).

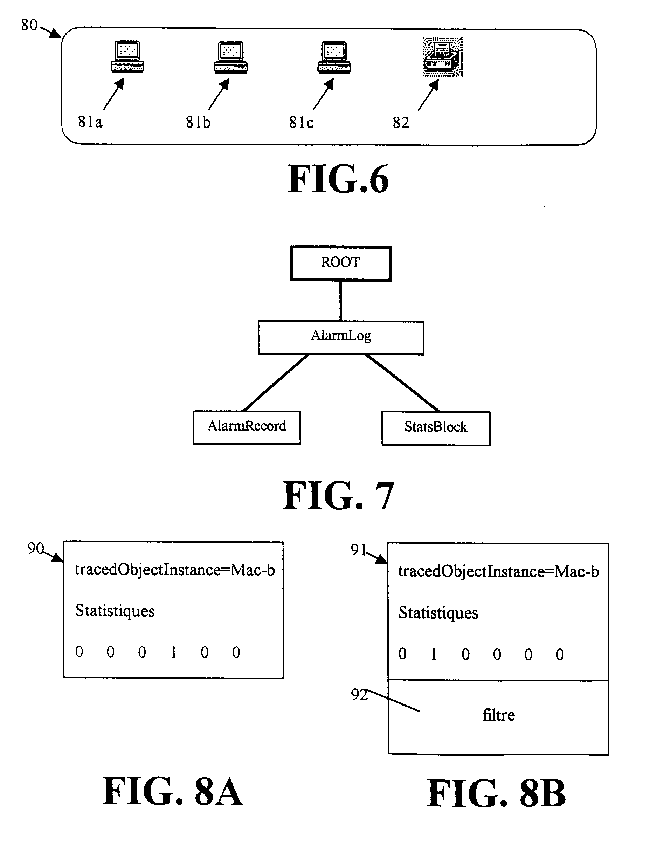

La figure 6 illustre un exemple d'utilisation de l'application de surveillance Monitor 31. On suppose qu'un utilisateur du système d'administration 10 active cette application. Grâce à l'interface graphique 32, l'activation de l'application Monitor ouvre une fenêtre 80 qui permet de représenter des instances de la base MIB sous forme d'icônes et de les animer selon un ou plusieurs modes d'animation. Dans l'exemple choisi, la fenêtre 80 contient quatre icônes, à savoir trois icônes 81a, 81b et 81c respectivement représentatives des trois machines gérées 12b (Mac-a, Mac-b et Mac-c) de la figure 1, et une icône 82 représentative d'une imprimante du système 11. Avec l'application Monitor, l'animation d'une icône est faite pour traduire en temps réel les alarmes se produisant dans le sous-arbre de l'objet surveillé correspondant. Bien entendu, l'animation pourrait se faire autrement qu'en temps réel. L'animation choisie est faite en changeant la couleur de l'icône correspondante selon la plus haute gravité (perceivedSeverity) des alarmes en cours selon les critères suivants :

- Vert : pas d'alarme et/ou pour une alarme RAS (Cleared),
- Orange pour un avertissement (Warning) ou une alarme mineure (Minor), et
- Rouge pour les autres alarmes (Major, Critical, Indeterminate)

L'application de surveillance Monitor est informée en temps réel des changements concernant les instances surveillées tracedObjectInstance, par des événements d'animation envoyés par le service ALM sous l'action de la primitive M-EVENT, comme indiqué à la figure 5.

La figure 7 est une vue schématique en forme d'arbre des instances d'une partie de la base MIB représentative du service ALM. Dans la base MIB, le service ALM est un objet d'une classe de journal d'alarmes (alarmLog), dont l'attribut de nommage est l'identifiant du journal d'alarmes (alarmLogId). L'instance de l'objet ALM est identifiée par le nom du service ALM (par exemple," AlarmLog" par défaut), et son instance mère est la racine ROOT de la base MIB. Le nom DN du service ALM est donc : /alarmLogId=AlarmLog.

Le service ALM gère deux classes d'objets :

- la classe alarmRecord relative à l'enregistrement d'une occurrence d'alarme, et
- la classe statsBlock représentative du bloc de statistiques relatif à une instance d'objet surveillé (tracedObjectInstance).

Une instance AlarmRecord de la classe alarmRecord est identifiée par l'attribut de nommage logRecordId, dont la valeur est un entier. Son nom distinctif DN est donc de la forme : /alarmLogId=AlarmLog/logRecordId=<numéro>.

Une instance StatsBlock de la classe statsBlock est identifiée par l'attribut de nommage statsBlockId, dont la valeur est un entier. Son nom DN est donc de la forme : /alarmLogId=AlarmLog/statsBlockId=<numéro>.

Un objet AlarmRecord est créé à la réception de la première occurrence d'une alarme. Ses principaux attributs (hors logRecordId) sont : sourceObjectInstance, eventType, probableCause et specificProblems. Il peut-être modifié par une nouvelle occurrence d'alarme ou par une requête M-SET.

La figure 8A illustre schématiquement un exemple d'objet StatsBlock 90. Un objet StatsBlock est créé soit par une requête M-CREATE, soit automatiquement après réception de la première occurrence d'une alarme provenant d'une instance de premier niveau dans la base MIB, de sorte que son nom DN est composé d'un seul nom RDN. L'objet StatsBlock 90 illustré contient le nom de l'instance surveillée qui s'y rapporte tracedObjectInstance, qui désigne dans l'exemple illustré dans la figuré 8A la machine Mac-b représentée par l'icône 81b sur la figure 6. L'objet StatsBlock 90 gère des statistiques indiquant, pour chacune des six valeurs de gravité perceivedSeverity, le nombre courant d'objets AlarmRecord dont l'instance sourceObjectInstance est contenue dans le sous-arbre de l'instance surveillée tracedObjectInstance de l'objet StatsBlock. Une alarme sur une instance fille de l'instance surveillée tracedObjectInstance modifie les statistiques dans l'objet StatsBlock relatif à l'instance surveillée. Lorsque ces statistiques sont modifiées de façon significative pour l'animation par alarmes en temps réel de l'application de surveillance (c'est-à-dire si la plus haute valeur de perceivedSeverity est modifiée) et que l'objet StatsBlock est en mode d'animation (précisé dans la requête M-CREATE ou dans une requête M-SET), alors le service ALM peut envoyer un événement d'animation. Selon l'exemple de la figure 8A, on a considéré que toutes les valeurs de la liste de gravité perceivedSeverity sont initialement égales à zéro et que la réception d'une alarme a modifié le quatrième chiffre de la liste en la valeur 1 correspondant à une alarme de gravité 3 relative à un problème mineur. Un événement d'animation est alors envoyé à l'application Monitor pour changer la couleur de l'icône 81b, initialement verte, à l'orange.

L'animation par alarmes en temps réel de l'application de surveillance Monitor ne permet actuellement pas de distinguer entre deux alarmes ayant des caractéristiques différentes. En effet, les objets StatsBlock recensent les alarmes relatives au sous-arbre de leur objet tracedObjectInstance et leurs statistiques ne tiennent pas compte des caractéristiques des alarmes. Cependant, il serait très avantageux de vouloir animer une icône pour les alarmes relatives à un problème donné, par exemple ayant les mêmes caractéristiques sourceObjectInstance, eventType, probableCause, specificProblems mais pas les autres caractéristiques définies précédemment. Par exemple, on ne peut pas animer l'icône représentative d'une machine particulière du réseau pour qu'elle change de couleur uniquement si cette machine tombe en panne, et non si un objet surveillé, par exemple un élément accessoire de cette machine est défaillant, tel qu'une imprimante. De même, l'icône ne peut pas également changer de couleur à la réception d'une alarme avertissant du manque de papier dans son imprimante locale. Un autre problème est lié au fait que, même si la gravité des alarmes peut être distinguée par les couleurs comme dans l'exemple choisi, il n'y a en l'occurrence que deux couleurs significatives (orange et rouge) alors qu'il peut y avoir beaucoup plus que deux types d'alarmes.

La solution proposée est un procédé qui, dans le cadre de l'exemple illustré, consiste en une première étape à sélectionner au moins un attribut des alarmes relatives à l'objet surveillé. Pour pouvoir sélectionner ou filtrer les alarmes dans les objets StatsBlock, on introduit la notion d'objets StatsBlock filtrés 91 tels que celui illustré dans la figure 8B. Un objet StatsBlock filtré 91 est obtenu en ajoutant un filtre 92 à un objet StatsBlock 90. Ce filtre permet de discriminer les objets AlarmRecord qui mettent à jour les statistiques. Ainsi, pour chaque problème à surveiller relatif à un objet donné de la base MIB, on crée dans le service ALM un objet StatsBlock filtré 91. La seconde étape du procédé consiste à mettre à jour l'objet StatsBlock filtré 91 lorsque, pour l'objet surveillé correspondant, le problème défini par les attributs sélectionnés se produit. En d'autres termes, lorsqu'une alarme est reçue pour chaque objet StatsBlock filtré 91 dont l'instance surveillée tracedObjectInstance est concernée, il suffit de vérifier si les valeurs des attributs de l'alarme reçue traversent le filtre 92 avant d'autoriser la mise à jour des statistiques. Étant donné qu'une nouvelle occurrence d'un même problème remplace l'occurrence précédente, ces deux occurrences peuvent toutes deux modifier les statistiques si elles passent le filtre 92. Par exemple, la nouvelle occurrence pourrait incrémenter les statistiques en traversant le filtre tandis que éventuellement la première occurrence diminuerait les statistiques en passant le filtre. La troisième étape du procédé consiste à envoyer, en réaction, un événement d'animation à l'icône correspondante. Lorsqu'un problème non surveillé se produit sur le même objet, l'objet StatsBlock filtré n'est pas mis à jour par la nouvelle occurrence, et si une éventuelle occurrence précédente ne modifie pas non plus l'objet StatsBlock filtré 91, alors aucun événement d'animation n'est envoyé.

La création d'un objet StatsBlock filtré 91 a été faite de la façon suivante. Dans l'exemple choisi, un utilisateur de l'application de surveillance 31 sélectionne dans la fenêtre 80 de la figure 6 un objet à surveiller. En l'occurrence, l'utilisateur sélectionne l'icône 81b représentative de la machine gérée Mac-b. Il suffit alors d'une requête M-CREATE envoyée par l'application de surveillance 31 lors du démarrage de l'animation sur l'icône 81b pour créer un objet StatsBlock filtré 91. Les paramètres de la requête contiennent, dans l'exemple choisi :

- l'instance de l'objet MIB à surveiller,
- la période d'animation de l'objet StatsBlock et représentée par l'attribut timeOut, et
- un filtre 92 contenant les attributs des alarmes à surveiller.

Il peut donc exister, pour une instance d'objet donné, autant d'objets StatsBlock filtrés 91 qu'il y a de filtres différents. Ainsi, trois objets StatsBlock filtrés 81a, 81b et 81c sont illustrés dans la figure 6, correspondant respectivement aux trois machines Mac-a, Mac-b et Mac-c.

Lorsque l'objet StatsBlock filtré 91 est créé, les statistiques sont initialement égales à zéro et il se met à jour, automatiquement dans l'exemple choisi, en recherchant dans le service ALM 41 les alarmes déjà arrivées concernant l'objet considéré et qui satisfont au filtre. Optionnellement, la mise à jour concerne aussi les alarmes relatives aux subordonnés de l'objet surveillé dans la base MIB. Dès que la mise à jour est terminée, l'objet StatsBlock filtré 91 envoie en temps réel ses statistiques par un événement d'animation. L'icône correspondante 81b dans l'application de surveillance 31 reste en gris tant que l'événement d'animation n'est pas arrivé.

La mise à jour d'un objet StatsBlock filtré 91 se fait selon l'exemple suivant. Lorsqu'un objet AlarmRecord est créé ou modifié, les objets StatsBlock filtrés 91 concernés par son instance d'origine sourceObjectInstance sont recherchés et ne sont mis à jour que si les caractéristiques de l'objet AlarmRecord passent le filtre de l'objet StatsBlock.

L'envoi d'événements d'animation et de rafraîchissement se fait selon l'exemple suivant. Un événement d'animation contient selon cet exemple les attributs suivants, conformes aux normes ISO :

- sourceObjectClass = classe StatsBlock,
- sourceObjectInstance = instance de la classe statsBlock (/alarmLogId=AlarmLog/statsBlockId=numéro),
- eventType = statsBlockUpdate,
- eventTime = date de la mise à jour de l'objet StatsBlock,
- eventInfo = liste ordonnée de l'objet surveillé tracedObjectInstance suivie des statistiques.

Le fait que la liste soit ordonnée signifie que l'objet surveillé est toujours le premier élément de la liste. Les statistiques qui suivent constituent aussi une liste ordonnée du nombre courant d'objets AlarmRecord pour chacune des six valeurs de gravité perceivedSeverity. Ainsi, le premier élément de la liste des statistiques correspond au nombre d'alarmes de gravité indéterminée (Indeterminate). Un objet StatsBlock peut par exemple, s'il est filtré ou non, envoyer des événements d'animation pendant une période de temps définie par l'attribut timeOut commençant à sa date d'armement (armTime) initialement égale à sa date de création. Au bout de cette période, il ne pourra plus envoyer d'événements d'animation, sauf si un rafraîchissement des objets StatsBlock a été effectué par l'application Monitor. Une primitive M-ACTION de type refreshStatsBlocks permet de rafraîchir tous les objets StatsBlock actifs, (c'est-à-dire ayant leurs attributs respectifs timeOut non nul) filtrés ou non, en mettant à jour la date d'armement (armTime) des objets StatsBlock.

Le procédé de l'exemple considéré inclut aussi la suppression de StatsBlock filtrés ou non. La suppression de certains objets StatsBlock se fait selon l'exemple suivant. Les objets StatsBlock relatifs aux instances de niveau supérieur à 1 dans la base MIB sont celles dont le nom distinctif DN est composé de plus d'un nom RDN. Ces objets sont effacés au bout d'une période choisie, un nombre de jours donné par exemple, à partir de leur date d'armement s'ils n'ont pas été rafraîchis. Cela permet d'éviter de maintenir inutilement les statistiques d'objets qui ne sont plus surveillés. Les objets StatsBlock de premier niveau ne sont pas concernés par ce nettoyage, afin de permettre un accès rapide aux statistiques des objets de premier niveau.

La solution illustrée offre donc deux avantages importants : une surveillance en temps réel et une isolation de problèmes spécifiques selon les domaines d'intérêt.

Des exemples particuliers de mise en oeuvre de cette solution vont maintenant être décrits. Ces exemples sont volontairement très simples dans le but principal de faire comprendre facilement comment l'invention peut être mise en oeuvre et quels avantages elle peut offrir.

Le premier exemple suppose que les machines gérées 12b sont surveillées pour provoquer une intervention en cas de panne portant sur les cartes-réseau 19R. Comme représenté sur les figures 1 et 3, chaque machine 12b de l'exemple choisi inclut une carte-réseau 19R, une carte vidéo 19V et une carte-son 19A. On considérera par exemple que chaque carte de même type, le type étant le réseau, la vidéo ou le son, a le même identifieur de carte. En cas de panne sur ces cartes, une alarme sera envoyée depuis la machine avec comme attributs :

- sourceObjectClass = classe de la machine dans la MIB (ici, ce sera la même pour toutes),
- sourceObjectInstance = instance de la machine dans la MIB (ici :/machine=nom),
- eventType = equipmentAlarm,
- eventTime = date de l'alarme sur la machine d'origine,
- probable Cause = equipmentMalfunction,

- specificProblems = liste d'identifieurs des cartes en panne,
- perceivedSeverity = gravité de la panne.

Dans l'application de surveillance Monitor 31, on crée une représentation ou mappe (de l'anglais map) de chacune des trois machines gérées 12b de l'exemple illustré dans la figure 1 par trois icônes respectives 81a-c comme représenté sur la figure 6. On sélectionne ensuite toutes ces icônes et on les anime par animation alarmes en temps réel avec un filtre 92 tel que :

probableCause = equipmentMalfunction ET specificProblems = sous-ensemble(identifieur carte réseau)

où ET désigne l'opération logique d'intersection.

Dans le journal d'alarmes 42 du service ALM 41 sont donc créés autant d'objets StatsBlock que de machines, ici trois. Chacun de ces objets StatsBlock ne compte que les alarmes dont la valeur de l'attribut probableCause vaut "equipmentMalfunction" ET dont la valeur de specificProblems contient dans sa liste l'identifieur de la carte réseau.

Initialement, toutes les statistiques des nouveaux objets StatsBlock sont à zéro si l'on considère qu'il n'y a pas encore eu d'alarmes sur les cartes réseau de ces machines, de sorte que toutes les icônes 81a-81c sont vertes. Lorsque la carte vidéo 19V d'une des machines, par exemple la machine Mac-b représentée par l'icône 81b, tombe en panne, une alarme de gravité critique est envoyée mais n'est pas prise en compte dans l'objet StatsBlock filtré 91 relatif à cette machine, car la valeur de la caractéristique specificProblems de l'alarme ne contient pas l'identifieur de la carte-réseau. Lorsque la carte-réseau 19R de la même machine Mac-b tombe en panne à son tour, une alarme de gravité critique est envoyée et prise en compte dans l'objet StatsBlock filtré, car la valeur de specificProblems de l'alarme contient l'identifieur de la carte-réseau avec celui de la carte vidéo. Donc, dans les statistiques relatives à cette machine, le chiffre concernant la gravité critique (Critical) passe à 1; un événement d'animation est alors envoyé. Il est reçu par la plate-forme 20 et analysé par l'application Monitor 31. En réponse, l'application Monitor fait passer au rouge la couleur de l'icône 81b de la machine correspondante Mac-b. La panne étant signalée distinctement des autres pannes possibles de la même machine, il est alors possible d'intervenir directement sur le problème de la carte-réseau 19R de la machine Mac-b.

On a vu qu'une nouvelle occurrence d'un même problème remplace l'occurrence précédente. Si, en continuant l'exemple précédent, la plate-forme 20 reçoit encore une alarme de gravité critique et si cette alarme concerne la carte-son 19A de la machine Mac-b, la valeur specificProblems de l'alarme contient l'identifieur de la carte-son 19A avec celui de la carte-réseau 19R et de la carte vidéo 19V. Dans ce cas, le chiffre concernant la gravité critique (Critical) passe à 2, puisque l'alarme passe le filtre et est considérée comme première occurrence d'un nouveau problème du fait que le problème spécifique specificProblems est différent du précédent. Un événement d'animation correspondant est alors envoyé mais ne fait pas changer la couleur de l'icône, qui était déjà rouge. Par contre, si une nouvelle alarme est émise sur le même problème spécifique, elle devient alors une nouvelle occurrence d'un même problème déjà considéré et remplace donc la précédente. Dans l'exemple considéré, cette nouvelle occurrence ne modifierait pas les statistiques. En effet, la même alarme se remplaçant elle-même et passant le filtre 92, les statistiques seraient incrémentées et décrémentées d'autant.

Un autre exemple concerne le cas particulier où le filtre porte sur une caractéristique qui ne fait pas partie des caractéristiques de la norme en vigueur qui identifient de façon unique une alarme et qui sont indiquées plus haut, à savoir les caractéristiques (sourceObjectInstance, eventType, probableCause, specificProblems). Dans ce cadre, la variante considérée dans le paragraphe précédent, relatif à l'apparition de deux occurrences successives d'un même problème, portera sur l'imprimante représentée dans la mappe de la figure 6 par l'icône 82. L'imprimante peut envoyer plusieurs alarmes, notamment une alarme indiquant l'absence de papier et une alarme relative à une panne. Selon cet exemple, l'administrateur ne désire pas rencontrer un problème d'absence de papier, qui est du ressort d'un utilisateur de l'imprimante, et ne veut recevoir qu'une alarme relative à une panne de l'imprimante. Dans ce cas, le filtre 92 n'est plus défini par la caractéristique relative au problème spécifique specificProblems du filtre défini précédemment, mais par la caractéristique optionnelle de texte additionnel additionalText (indiquée plus haut) ayant comme valeur le message "imprimante en panne". En d'autres termes, le filtre 92 peut se définir de la façon suivante :

probableCause = equipmentMalfunction ET additionalText = imprimante en panne.

Ainsi, à la réception d'une alarme contenant dans la caractéristique AdditionalText le message "imprimante en panne", l'alarme passe le filtre et les statistiques évoluent pour modifier la couleur de l'icône en conséquence.

On suppose maintenant que l'imprimante correspondant à l'icône 82 a été remise en état de fonctionnement et qu'elle vient à manquer de papier. On a vu que l'alarme relative au manque de papier ne passe pas le filtre. En supposant que le message relatif au manque de papier ne puisse intervenir que si l'imprimante est en marche, l'occurrence relative à la remise en marche de l'imprimante, et qui est remplacée par la suite par l'alarme relative au manque de papier, passe le filtre et diminue ainsi les statistiques. Il s'ensuit que l'icône 82 peut repasser au vert, indiquant que l'imprimante est fonctionnelle. Cet exemple est seulement indicatif des avantages que peut offrir l'invention.

D'une manière générale, le procédé de l'invention peut s'appliquer isolément ou, comme illustré, dans un ensemble de procédés similaires, dits d'administration, ordinairement contenus dans un système d'administration. Le procédé peut aussi être élargi à plusieurs systèmes informatiques ou être dédié à une ou plusieurs parties et/ou fonctions de système, telles que des réseaux informatiques et des applications. Par conséquent, l'invention pourrait s'appliquer aussi bien à des dysfonctionnements de réseau qu'à des dysfonctionnements d'applications exécutées dans un système informatique. On a vu aussi que le procédé de l'invention sert à gérer les états de fonctionnement qui résultent des alarmes détectées. En outre, bien que dans l'exemple illustré le terme "alarme" traduise l'événement nommé "alarm" du protocole CMIP, il est clair que ce terme peut comprendre toute sorte d'événement similaire représentatif d'un dysfonctionnement. Le procédé s'applique donc plus généralement à la gestion des états de fonctionnement dans un système informatique. D'autre part, bien que l'exemple spécifique décrit et illustré porte sur les blocs de statistiques StatsBlock, il ressort clairement de la description que d'une manière générale l'invention peut porter sur tout objet d'information sur des alarmes représentatives de dysfonctionnements relatifs à un objet surveillé.

Par conséquent, l'invention a pour objet général un procédé de gestion par ordinateur des états de fonctionnement dans un système informatique 11 représenté en technologie orientée objets, consistant à créer et mettre en mémoire un objet 90 StatsBlock d'information sur des alarmes représentatives de dysfonctionnements relatifs à un objet surveillé tracedObjectInstance dans le système, à classer l'objet d'information 90 dans une hiérarchie d'au moins deux niveaux représentatifs de la qualité d'un état de fonctionnement de l'objet surveillé, et à donner à un utilisateur du système informatique une information 81 sur l'état de l'objet surveillé en réponse au classement de l'objet d'information. La solution proposée consiste à ajouter à l'objet d'information (90) un filtre (92) pour sélectionner au moins une caractéristique des alarmes relatives à l'objet surveillé et former ainsi au moins un objet d'information filtrée (91), à mettre à jour l'état de l'objet d'information filtrée si les alarmes correspondent à celle(s) sélectionnée(s) et à mettre à jour en conséquence l'information (81a-c) donnée à l'utilisateur.

On a vu que ce procédé peut avoir d'autres caractéristiques accessoires et avantageuses. Par exemple, les alarmes peuvent être relatives à l'objet surveillé et au sous-arbre de cet objet. Les alarmes peuvent être des instances d'une classe relative à l'enregistrement des occurrences d'alarme. L'objet d'information StatsBlock peut aussi être une instance d'une classe représentative d'un bloc de statistiques relatif à une instance de l'objet surveillé. Accessoirement, la classe des alarmes et/ou la classe des blocs de statistiques sont des sous-classes d'une classe de journal d'alarmes. De préférence aussi, les objets surveillés et/ou la classe de journal d'alarmes appartiennent à une base MIB. Selon l'exemple illustré, l'information (81a-c) donnée à l'utilisateur inclut au moins une icône et la mise à jour de cette information consiste à animer l'icône en conséquence. Enfin, une occurrence d'alarme relative à un problème donné est remplacée par une occurrence qui la suit immédiatement d'une alarme relative audit problème.

**Revendications**

**1.** Procédé de gestion par ordinateur (10) des états de fonctionnement d'un système informatique (11) représenté en technologie orientée objets, consistant à créer et mettre en mémoire un objet (90-StatsBlock) d'information sur des alarmes représentatives de dysfonctionnements relatifs à un objet surveillé (tracedObjectInstance) dans le système, à classer l'objet d'information (90) dans une hiérarchie d'au moins deux niveaux représentatifs de la qualité d'un état de fonctionnement de l'objet surveillé, et à donner à un utilisateur du système informatique une information (81) sur l'état de l'objet surveillé en réponse au classement de l'objet d'information, caractérisé en ce qu'il consiste à ajouter à l'objet d'information (90) un filtre (92) pour sélectionner au moins une caractéristique des alarmes relatives à l'objet surveillé et former ainsi au moins un objet d'information filtrée (91), à mettre à jour l'état de l'objet d'information filtrée si les alarmes correspondent à celle(s) sélectionnée(s) et à mettre à jour en conséquence l'information (81a-c) donnée à l'utilisateur.

**2.** Procédé selon la revendication 1, caractérisé en ce que les alarmes sont relatives à l'objet surveillé et au sous-arbre de cet objet.

**3.** Procédé selon la revendication 1 ou 2, caractérisé en ce que les alarmes sont des instances (AlarmRecord) d'une classe (alarmRecord) relative à l'enregistrement des occurrences d'alarme.

**4.** Procédé selon l'une des revendications 1 à 3, caractérisé en ce que l'objet d'information (90-StatsBlock) est une instance d'une classe (statsBlock) représentative d'un bloc de statistiques relatif à une instance de l'objet surveillé.

**5.** Procédé selon la revendication 3 ou 4, caractérisé en ce que la classe des alarmes (AlarmRecord) et/ou la classe des blocs de statistiques (StatsBlock) sont des sous-classes d'une classe (alarmLog) de journal d'alarmes.

**6.** Procédé selon l'une des revendications 1 à 5, caractérisé en ce que les objets surveillés et/ou la classe de journal d'alarmes appartiennent à une base d'informations d'administration (MIB).

**7.** Procédé selon l'une des revendications 1 à 4, caractérisé en ce que l'information (81a-c) donnée à l'utilisateur inclut au moins une icône et en ce que la mise à jour de cette information consiste à animer l'icône en conséquence.

**8.** Procédé selon l'une des revendications 1 à 7, caractérisé en ce qu'une occurrence d'alarme relative à un problème donné est remplacée par une occurrence qui la suit immédiatement d'une alarme relative audit problème.

**9.** Système d'administration (10) d'un système informatique (11), caractérisé en ce qu'il met en oeuvre le procédé selon l'une des revendications 1 à 8.

**10.** Système informatique (11), caractérisé en ce qu'il met en oeuvre le procédé selon l'une des revendications 1 à 8 ou le système d'administration défini par la revendication 9.

**FIG. 1**

Autre Gestionnaire 17a

20

Gestionnaire 17a

SMI

60

SML Applications

30

GUI

Lanceur d'application

Fonctions de haut niveau

32

33

Application de base

31

35

34

SML-CMIS

40

42

Journal d'alarmes

Service de journal d'alarmes

41

Service de journal d'événements

43

Services

70

Courtier de requêtes CMIS

71 Routeur d'événements

Routeur de commandes 72

73 Sécurité

Gestionnaire d'objets sous la racine 74

75 Horloge

Intégrateurs d'agents (AI)

CMIP AI 51

Couches CMIP 52

SNMP AI

Couches SNMP

Y AI

Couches Y

50

17b

Agent CMIP

Agent SNMP

Agent Y

# FIG. 2

MIB

ROOT

Mac-a | Mac-b | Mac-c

18

Carte-réseau | Carte-son

Carte vidéo

## FIG. 3

MIB

ROOT

a | b

$c_1$ | $c_2$ | $d_1$ | $d_2$

## FIG. 4

31

**Application
de surveillance
Monitor**

70

Courtier de
requêtes CMIS

Création M-CREATE
Mise à jour M-SET

Evénements
d'animation M-EVENT

M-GET

**journal
d'alarmes**

statistiques

51

Intégrateur d'agents

alarmes

**Service
ALM**

42

17b

agent

41

## FIG. 5

**FIG.6**

**FIG. 7**

**FIG. 8A**

**FIG. 8B**

Office européen
des brevets

**RAPPORT DE RECHERCHE EUROPEENNE**

Numéro de la demande

EP 00 40 1037

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | M. CADDEN ET AL.: "Systems Management Frameworks – How to get your management infrastructure building site to enjoy the benefits of a systems architecture renaissance" INFORMATION WEEK, no. 27, 15 – 28 avril 1998, page 54-58, 61-62, 64-66, 69-72 XP000866471 UK * page 65, colonne de droite, ligne 1 – page 72, colonne de gauche, dernière ligne * | 1-10 | H04L12/24 G06F11/32 |
| A | STRATMAN R H: "DEVELOPMENT OF AN INTEGRATED NETWORK MANAGER FOR HETEROGENEOUS NETWORKS USING OSI STANDARDS AND OBJECT-ORIENTED TECHNIQUES" IEEE JOURNAL ON SELECTED AREAS IN COMMUNICATIONS,US,IEEE INC. NEW YORK, vol. 12, no. 6, août 1994 (1994-08), pages 1110-1120, XP000491335 ISSN: 0733-8716 * page 1111, colonne de droite, ligne 33 – page 1112, colonne de gauche, ligne 10 * * page 1113, colonne de droite, ligne 5 – ligne 7 * * page 1114, colonne de droite, ligne 11 – ligne 28 * * page 1115, colonne de gauche, ligne 17 – page 1116, colonne de gauche, ligne 35 * * page 1118, colonne de gauche, ligne 53 – page 1119, colonne de gauche, ligne 22 * | 1-10 | |
| A | WO 96 24899 A (ERICSSON TELEFON AB L M ;ANDERSSON KJELL (SE); ISRAELSSON PER (SE)) 15 août 1996 (1996-08-15) * page 12, ligne 19 – ligne 25 * | 1,9,10 | DOMAINES TECHNIQUES RECHERCHES (Int.Cl.7) H04L G06F |

-/--

Le présent rapport a été établi pour toutes les revendications

| Lieu de la recherche | Date d'achèvement de la recherche | Examinateur |
|---|---|---|
| LA HAYE | 19 juillet 2000 | Herreman, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
                                                                       
& : membre de la même famille, document correspondant

EPO FORM 1503 03.82 (P04C02)

# EP 1 047 222 A1

**Office européen des brevets**

## RAPPORT DE RECHERCHE EUROPEENNE

**Numéro de la demande**

EP 00 40 1037

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | HO M ET AL: "SNMP MANAGEMENT OF TELECOMMUNICATIONS CARRIER NETWORKS" IEEE NETWORK OPERATIONS AND MANAGEMENT SYMPOSIUM (NOMS),US,NEW YORK, IEEE, vol. SYMP. 5, 15 avril 1996 (1996-04-15), page 200-212A XP000641092 ISBN: 0-7803-2519-2 * abrégé * * page 201, ligne 1 - page 203, ligne 13 * * page 208, ligne 1 - page 209, ligne 11 * --- | 1-10 | |
| A | SCHOTT W ET AL: "NETZVERWALTUNG UND -MANAGEMENT. \(2) STRATEGISCHE RESSOURCEN" NACHRICHTEN ELEKTRONIK UND TELEMATIK,DE,VERLAG DR. HUETHIG. HEIDELBERG, vol. 44, no. 12, décembre 1990 (1990-12), page 543-547 XP000177186 ISSN: 0177-5499 * le document en entier * ----- | 1,9,10 | |

**DOMAINES TECHNIQUES RECHERCHES (Int.Cl.7)**

Le présent rapport a été établi pour toutes les revendications

| Lieu de la recherche | Date d'achèvement de la recherche | Examinateur |
|---|---|---|
| LA HAYE | 19 juillet 2000 | Herreman, G |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

17

## ANNEXE AU RAPPORT DE RECHERCHE EUROPEENNE
## RELATIF A LA DEMANDE DE BREVET EUROPEEN NO.

EP 00 40 1037

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

19-07-2000

| Document brevet cité au rapport de recherche | Date de publication | Membre(s) de la famille de brevet(s) | Date de publication |
|---|---|---|---|
| WO 9624899 A | 15-08-1996 | SE 504072 C | 04-11-1996 |
| | | AU 692056 B | 28-05-1998 |
| | | AU 4683596 A | 27-08-1996 |
| | | BR 9607411 A | 07-07-1998 |
| | | CA 2209912 A | 15-08-1996 |
| | | CN 1173932 A | 18-02-1998 |
| | | EP 0808488 A | 26-11-1997 |
| | | FI 973913 A | 08-10-1997 |
| | | JP 10513327 T | 15-12-1998 |
| | | NZ 301420 A | 28-07-1998 |
| | | SE 9500442 A | 09-08-1996 |

EPO FORM P0460

Pour tout renseignement concernant cette annexe : voir Journal Officiel de l'Office européen des brevets, No.12/82